# EUROPÄISCHE PATENTSCHRIFT

(11) **EP 2 994 257 B1**
(45) Veröffentlichungstag und Bekanntmachung des Hinweises auf die Patenterteilung: **15.04.2020**
(21) Anmeldenummer: 14733961.8
(22) Anmeldetag: 05.05.2014
(51) Int. Cl.: B22F 3/105, B22F 3/11, B22F 3/26, B22F 5/10, C22C 27/04, B23K 103/08

(54) **VERFAHREN ZUR HERSTELLUNG EINES FORMKÖRPERS UND DAMIT HERSTELLBARER FORMKÖRPER**
METHOD FOR PRODUCING A SHAPED BODY AND A SHAPED BODY THAT CAN BE PRODUCED THEREBY
PROCÉDÉ DE FABRICATION D'UN CORPS FAÇONNÉ ET CORPS FAÇONNÉ FABRIQUÉ PAR CE PROCÉDÉ

(30) Priorität: 07.05.2013 AT 1662013 U
(43) Veröffentlichungstag der Anmeldung: 16.03.2016
(73) Patentinhaber: Plansee SE, 6600 Reutte (AT)
(72) Erfinder: KESTLER, Heinrich, 6600 Reutte (AT); TABERNIG, Bernhard, 6600 Pflach (AT)
(74) Vertreter: Ciesla, Bettina
(86) Internationale Anmeldenummer: PCT/AT2014/000105
(87) Internationale Veröffentlichungsnummer: WO 2014/179822

(56) Entgegenhaltungen:
- EP-A1- 2 484 465
- EP-A2- 0 446 934
- AT-U1- 5 837
- JP-A- 2001 152 204
- RUIDI LI ET AL: "316L Stainless Steel with Gradient Porosity Fabricated by Selective Laser Melting", JOURNAL OF MATERIALS ENGINEERING AND PERFORMANCE, Bd. 19, Nr. 5, 11. September 2009 (2009-09-11), Seiten 666-671, XP055141597, ISSN: 1059-9495, DOI: 10.1007/s11665-009-9535-2 in der Anmeldung erwähnt

## Beschreibung

Die Erfindung betrifft ein Verfahren zur Herstellung eines Formkörpers aus einem Durchdringungsverbundwerkstoff und einen damit herstellbaren Formkörper.

Metallmatrix-Verbundwerkstoffe (engl. metal matrix composite, MMC) sind Verbundwerkstoffe, die aus einer zusammenhängenden Matrix aus Metall oder einer Legierung, in die eine keramische, organische oder metallische Sekundärkomponente eingebracht ist, bestehen. Bildet die Sekundärkomponente eine überwiegend zusammenhängende Struktur, spricht man von einem Durchdringungsverbundwerkstoff. Derartige Durchdringungsverbundwerkstoffe sind Thema der vorliegenden Erfindung. Anwendung für derartige Werkstoffe finden sich beispielsweise für Thermal Management Aufgaben in der Elektronik, wo Werkstoffe für Wärmesenken benötigt werden, die sich durch hohe Wärmeleitfähigkeit auszeichnen und deren Wärmeausdehnungseigenschaften an das wärmeerzeugende Bauteil angepasst sind. Für diesen Zweck kommen Metallmatrix-Verbundwerkstoffe aus Wolfram-Kupfer oder Molybdän-Kupfer zum Einsatz, wobei die geringe Wärmeausdehnung von Wolfram bzw. Molybdän mit der guten thermischen Leitfähigkeit von Kupfer in einem Werkstoff vereint wird. Die Wärmeausdehnung des Werkstoffs kann über den Volumenanteil der beiden Komponenten eingestellt werden.
Ein weiteres Anwendungsbeispiel für metallische Metall-Matrix Verbundwerkstoffe sind Werkstoffe, die zur Kontaktierung bei Hochspannungsschaltern Verwendung finden. Diese Kontaktwerkstoffe müssen einerseits für eine sichere Funktion von Hochspannungsschaltkontakten eine geringe Verschweißneigung aufweisen, andererseits aus Verarbeitungsgründen gleichzeitig gut schweiß- und lötbar sein. Auch für diese Anwendung kommt ein Verbundwerkstoff auf Basis von Wolfram und Kupfer zum Einsatz. In diesem Anwendungsbeispiel ist es die Härte, Verschleiß- und Abbrandfestigkeit von Wolfram, die mit der guten elektrischen und thermischen Leitfähigkeit von Kupfer verknüpft wird.

Ein wichtiges Ziel und Herausforderung bei der Herstellung von Werkstoffen ist die lokale Optimierung des Werkstoffs. Einen ersten Schritt in Richtung lokal optimierter Werkstoffe stellen sogenannte funktional gradierte Werkstoffe (FGM) dar, das sind Verbundwerkstoffe, bei denen sich die Eigenschaften graduell in annähernd kontinuierlicher Weise in mindestens einer Richtung ändern. Der Werkstoff kann dabei einen Gradienten in der chemischen Zusammensetzung einer Phase, einen Gradienten im Volumenanteil einer Phase oder bei pulvermetallurgisch hergestelltem Werkstoff einen Gradienten in der Porosität oder Porengröße einer Phase aufweisen.

Für gradierte oder lokal optimierte Verbundwerkstoffe sind aus dem Stand der Technik im Wesentlichen zwei Klassen von Herstellungsverfahren bekannt, einstufige Verfahren wie Beschichtungsverfahren oder direktes Sintern von Pulvermischungen mit unterschiedlicher Zusammensetzung und/oder Morphologie und zweistufige Verfahren, bei denen in einem ersten Schritt ein poröser Formkörper hergestellt wird, der in einem zweiten Prozessschritt mit einer niedrigerschmelzenden Komponente infiltriert wird. Der poröse Formkörper kann direkt, beispielsweise mittels klassischer pulvermetallurgischer Verfahren oder chemischer, physikalischer Abscheidemethoden, oder indirekt, beispielsweise mittels Sintern mit Hilfe von Additiven und anschließender Entbinderung gefertigt werden. Die gradierte Struktur kann dabei durch Variation der verwendeten Pulvergröße erzeugt werden.
Diesen aus dem Stand der Technik bekannten Verfahren ist gemeinsam, dass der Formkörper lagenweise aufgebaut wird und eine kontrollierte Gradierung der Werkstoffeigenschaften nur in die Richtung des Werkstoffaufbaus möglich ist. Eine Gradierung kann zudem nicht lokal auf ein definiertes Volumen im Werkstoff begrenzt werden. Die bekannten Verfahren sind ungenau und für lokale Optimierungen des Werkstoffs auf einer Größenskala im mm-Bereich nicht geeignet. Es ist ferner nicht möglich, endkonturnahe Formkörper zu fertigen.

Eine Lösungsmöglichkeit zur Herstellung eines endkonturnahen Verbundwerkstoff-Formkörpers wird in US20040081573 vorgeschlagen. US20040081573 beschreibt ein Verfahren zur Herstellung eines Metallmatrix-Verbundwerkstoffs, bei dem in einem ersten Schritt durch selektives Lasersintern (SLS) ein poröser Formkörper hergestellt wird, der in einem anschließenden Schritt mit einer niedriger schmelzenden Komponente infiltriert wird. Der durch selektives Lasersintern hergestellte Formkörper zeichnet sich zwar durch eine endkonturnahe Geometrie und eine hohe Grünfestigkeit aus, das Verfahren ist aber aufgrund der Notwendigkeit von organischen und anorganischen Additiven und eines zusätzlichen Entbinderungsschritts sehr aufwendig. Die Fertigung eines gradierten Werkstoffs oder lokal optimierten Werkstoffs wird in US20040081573 nicht thematisiert. Eine direkte Fertigung eines porösen Formkörpers mittels selektiven Lasersintern ohne den thermischen Entbinderungsschritt ist aufgrund der langen Prozessdauer, die für die Verfestigung der Struktur (d.h. Ausbildung von Sinterhälsen) erforderlich ist, für industrielle Großserienproduktion wenig geeignet.
Aus der aktuellen Literatur ist ferner bekannt, selektives Laserschmelzen (SLM), bei dem das Pulver mittels eines Laserstrahls lokal auf Schmelztemperatur erhitzt und aufgeschmolzen wird, für die Fertigung von porösen Strukturen mit komplexer Geometrie (Stoffregen, et al, "Selective Laser Melting of Porous Structures" , Solid Freeform Fabrication Symposium, Austin, Texas, (2011), p. 680), zur Fertigung eines Porositätsgradienten bei Edelstahl (Li, Ruidi et al, "316L Stainless Steel with Gradient Porosity Fabricated by Selective Laser Melting" Journal of Materials Engineering and Performance, Vol 19(5), (2010) p.666) und für die Fertigung von einem porösen Formkörper (Jeppe Byskov et al, "Additive Manufacturing of Porous Metal Components" Fraunhofer Direct Digital Manufacturing Conference, Berlin (2012)) zu verwenden. Die Verwendung von SLM zur Herstellung eines metallischen Durchdringungswerkstoffs wurde von keinem dieser Autoren thematisiert.

Die EP 2 484 465 A1 betrifft ein Verfahren zur Behandlung von Werkstücken, die eine ungewünschte oberflächliche Porosität aufweisen, wobei diese oberflächliche Porosität insbesondere durch die Herstellung des Werkstückes mittels Elektronenstrahlschmelzen bedingt sein kann. Zur Beseitigung dieser ungewünschten oberflächlichen Porosität wird gemäß dem Verfahren der EP 2 484 465 A1 eine flüssige Metalllegierung in die oberflächliche Porosität infiltriert und anschließend isothermisch verfestigt. Aus der JP 2001/152204 A ist ein Eisen-basiertes Pulver bekannt, das zum selektiven Verfestigen mittels eines Lichtstrahls geeignet ist. Nach Aufbau eines Formkörpers durch selektives Verfestigen dieses Pulvers kann der Formkörper, insbesondere zur Optimierung seiner Oberflächeneigenschaften, mit einem zweiten Metall mit niedrigerem Schmelzpunkt infiltriert werden.

Aufgabe der Erfindung ist, ein prozesstechnisch einfach zu handhabbares Herstellungsverfahren für einen metallischen Formkörper zur Verfügung zu stellen, bei dem Werkstoffeigenschaften bedarfsgerecht lokal optimiert werden können, insbesondere gradierte Strukturen hergestellt werden können. Das erfindungsgemäße Verfahren soll zudem die Herstellung eines komplexen, endkonturnahen Formkörpers ermöglichen und auch für die Verarbeitung von höherschmelzenden metallischen Werkstoffen geeignet sein.
Diese Aufgabe wird durch ein Verfahren mit den Merkmalen des Anspruchs 1 gelöst. Ein Formkörper aus einem Durchdringungswerkstoff mit lokal anpassbaren Werkstoffeigenschaften bzw. mit gradierten Strukturen ist Gegenstand von Nebenansprüchen.

Grundgedanke des erfindungsgemäßen Verfahrens ist, ein selektives Strahlschmelzverfahren wie beispielsweise selektives Laserschmelzen (SLM) oder selektives Elektronenstrahlschmelzen (EBM) zur schichtweisen Herstellung eines metallischen Gerüst-Formkörpers, der zumindest bereichsweise eine offenporige Gerüststruktur aufweist, zu verwenden und diesen Gerüst-Formkörper anschließend mit einer niedriger schmelzenden metallischen Komponente zu infiltrieren. Der zumindest bereichsweise poröse Gerüst-Formkörper wird dabei schichtweise aus einem Pulver oder aus einer Pulvermischung mit Primärkomponente (mindestens 50 Gewichtsprozent) aus Molybdän oder aus Wolfram aufgebaut (erste Komponente). Dazu wird das Pulver bzw. die Pulvermischung ohne Zusatz von organischen Binde- oder Flussmittel in einer Schicht aufgebracht, mittels eines über die Pulverschicht geführten Strahls, der in die Pulverschicht lokal Energie einkoppelt, beispielsweise eines Laser bzw. Elektronenstrahls, selektiv an vorbestimmten Stellen zumindest teilweise aufgeschmolzen und verfestigt sich bei Erstarrung. Die Porosität und Endkontur der Gerüststruktur des Formkörpers wird durch entsprechende Führung des Laser- bzw. Elektronenstrahls eingestellt. Der so hergestellte zumindest bereichsweise poröse Gerüst-Formkörper wird im Anschluss mit einer Schmelze aus Kupfer oder einer Kupferlegierung (zweite Komponente), die einen im Vergleich zum ersten Metall bzw. ersten Legierung niedrigeren Schmelzpunkt aufweist, infiltriert. Indem die Porosität bzw. die Porengröße der Gerüststruktur des Formkörpers und damit der Anteil des Infiltranten über das Volumen des Formkörpers variiert wird, kann ein Formkörper mit lokal optimierten Eigenschaften, beispielsweise gradierte Strukturen in beliebigen Richtungen, nicht nur in der Richtung des lagenweisen Aufbaus, hergestellt werden.

In einem bevorzugten Ausführungsbeispiel kann dem Pulver bez. der Pulvermischung ein geeigneter metallischer Zusatz, der die Grenzflächenspannung zwischen der Gerüststruktur und der infiltrierten Schmelze erniedrigt, beigemengt werden. Dieser Zusatz verbessert die Benetzbarkeit des Gerüst-Formkörpers mit der infiltrierten Schmelze und ermöglicht dadurch, einen dichteren Durchdringungsverbundwerkstoff herzustellen. Beispielsweise kann bei einem Durchdringungsverbundwerkstoff auf Basis von Wolfram-Kupfer bzw. Molybdän-Kupfer dem zur Bildung der Gerüststruktur verwendeten Wolfram- bzw. Molybdän-Pulver Nickel hinzugefügt werden. Der Zusatz von Nickel verbessert die Benetzbarkeit der Kupferschmelze mit der Gerüststruktur aus Wolfram- bzw. Molybdän.
In einem weiteren Ausführungsbeispiel kann zur Erhöhung des Volumenanteils der zweiten Komponente im Verbundwerkstoff das Pulver bzw. die Pulvermischung, aus dem die Gerüststruktur des Formkörpers gebildet wird, auch Anteile aus dem zweiten Metall bzw. der zweiten Legierung, mit dem der Formkörper infiltriert wird, aufweisen. Im Beispiel des Durchdringungsverbundwerkstoffs aus Wolfram-Kupfer bedeutet das, dass das Ausgangspulver für die Bildung der Gerüststruktur neben Wolfram auch Anteile von Kupfer aufweisen kann. Der Anteil der zweiten Komponente am Pulver bzw. an der Pulvermischung für die Gerüststruktur ist dabei an den gewünschten Volumenanteil dieser Komponente am Verbundwerkstoff anzupassen. Es sollte allerdings darauf geachtet werden, dass durch die höherschmelzende Komponente eine ausreichend zusammenhängendes Netzwerk gebildet wird, das stabil bleibt, wenn der Formkörper im Anschluss mit der Schmelze infiltriert wird und dabei ein Teil der Gerüststruktur schmilzt bzw. erweicht. Aufgrund dieser Anforderung beträgt der Anteil des zweiten Metalls bzw. der zweiten Legierung am Ausgangspulver für die Gerüststruktur in der Regel nicht mehr als 30 Volumenprozent.
Erfindungsgemäß brauchen dem Pulver bzw. der Pulvermischung keine organischen Binde- oder organische Flussmittel zugesetzt werden.

Zur Bildung der Gerüststruktur des Formkörpers wird das zu verarbeitende Pulver in einer dünnen Schicht auf einer vertikal bewegbaren Grundplatte aufgebracht. Die Pulverschicht wird mittels eines fokussierten Laserstrahls, Elektronenstrahls oder einer anderen geeigneten fokussierbaren Wärmequelle in horizontaler Richtung gescannt und an jenen Stellen lokal erhitzt, wo das Pulver verfestigt werden soll. Die Energie, die an ausgewählten Positionen vom Laser bzw. Elektronenstrahl zugeführt wird, wird vom Pulver absorbiert und ist derart gewählt, dass es zu einem lokal begrenzten Aufschmelzen von Pulverpartikeln kommt, wobei einzelne Pulverpartikel vollständig oder nur zum Teil aufgeschmolzen werden können. Es ist ausreichend, falls die Pulverpartikel nur an Kontaktstellen aufgeschmolzen werden. Bei Erstarrung bilden die zur Gänze oder an Kontaktstellen zum Teil aufgeschmolzenen Partikel eine verfestigte, zusammenhängende Gerüststruktur mit überwiegend offenporiger Struktur.
Die Porosität und Endkontur des Gerüst-Formkörpers wird durch entsprechende Führung des Laser- bzw. Elektronenstrahls eingestellt. Der Laser bzw. Elektronenstrahl kann mittels geeigneter, aus dem Stand der Technik bekannten Optiken über die Pulverschicht gelenkt werden. Die Daten für die Führung des Laser bzw. Elektronenstrahls, Scangeschwindigkeit, Belichtungsmuster und Strahlungsintensität, werden aus der gewünschten 3 dimensionalen Kontur und der gewünschten Porositäts- bzw. Porengrößenverteilung des Gerüststruktur des Formkörpers softwaremäßig vorab ermittelt.

Besteht das Pulver aus einer Legierung oder aus einer Mischung aus mehreren Bestandteilen, die einen unterschiedlichen Schmelzpunkt aufweisen, so schmilzt zuerst der Bestandteil mit dem niedrigerem Schmelzpunkt und Bestandteile mit höherem Schmelzpunkt erst verzögert oder gegebenenfalls gar nicht, falls durch die Einkopplung der Wärme die Schmelztemperatur nicht erreicht wird. Es ist daher vorteilhaft, wenn sich die Schmelztemperaturen der einzelnen Bestandteile nicht allzu sehr unterscheiden. Zur Ausbildung einer verfestigten Gerüststruktur ist es nicht notwendig, dass sämtliche Bestandteile des Pulvers aufgeschmolzen werden, sondern es genügt, falls der niederschmelzende Bestandteil zumindest zum Teil aufgeschmolzen wird und dieser bei Erstarrung eine zusammenhängende Gerüststruktur bildet, in die gegebenenfalls Pulverpartikel mit höherem Schmelzpunkt eingebettet sind.

Der poröse Gerüst-Formkörper mit gewünschter Endkontur und vorbestimmter Porosität wird lagenweise aufgebaut. Nach dem Fertigstellen einer Schicht wird die Grundplatte um den Betrag einer Schichtdicke abgesenkt und erneut eine Pulverschicht aufgetragen, die an den gewünschten Stellen verfestigt wird. Dieser Zyklus wird solange wiederholt, bis der Gerüst-Formkörper mit der erwünschten Gerüststruktur fertiggestellt ist.

Dieser Prozess zur Herstellung des porösen Gerüst-Formkörpers kann in einer geeigneten Atmosphäre, beispielsweise in Vakuum oder einer Inertgasatmosphäre wie in einer Argon- und/oder Helium-Atmosphäre durchgeführt werden.

Nach der lagenweisen Herstellung des porösen Gerüst-Formkörpers erfolgt die Infiltration mit einer Schmelze aus Kupfer oder einer Kupferlegierung, welche einen niedrigeren Schmelzpunkt als der Hauptbestandteil des Gerüst-Formkörpers aufweist. Die Infiltration kann beispielsweise durch Tränken des Gerüst-Formkörpers in einer Schmelze oder mittels Gasdruckinfiltration erfolgen. Für einen dichten Festkörper und damit gut vom Infiltranten durchdringbaren Werkstoff soll die Gerüststruktur des Formkörpers überwiegend offenporig sein und die Schmelze den porösen Gerüst-Formkörper gut benetzen. In einem Ausführungsbeispiel weist die Schmelze einen Zusatz zur Verbesserung der Benetzbarkeit auf.

Das erfindungsgemäße Verfahren zeichnet sich dadurch aus, dass in sehr flexibler, aber gut kontrollierbarer Weise die Porosität der Gerüststruktur und somit der Volumenanteil des Infiltranten in allen 3 Raumrichtungen variiert werden kann und nicht nur wie aus dem Stand der Technik bekannt in der Richtung des schichtweisen Aufbaus. Es handelt sich zudem um ein äußerst wirtschaftliches und für die industrielle Produktion geeignetes Verfahren, im Gegensatz zu den in der Einleitung erwähnten sinter- oder spritztechnischen Verfahren ist zur gezielten Veränderung der Porosität eine prozesstechnisch aufwendige Veränderung der Pulvermorphologie wie Partikelform, Partikelgröße oder Partikelverteilung nicht notwendig.

Ein weiterer entscheidender Vorteil des erfindungsgemäßen Verfahren ist, dass der durch das Strahlschmelzverfahren erhaltene poröse Gerüst-Formkörper eine ausreichende mechanische Stabilität aufweist, sodass beim nachfolgenden Infiltrieren kaum Verzug oder Schrumpfung auftritt und daher eine hohe Maß- und Formgenauigkeit des Formkörpers erzielbar ist. Bei Bedarf kann der nahezu schwindungsfrei erhaltene Formkörper im Anschluss an das Infiltrieren nachbearbeitet werden.
In einer bevorzugten Ausführungsvariante werden der Boden und die Außenwände des porösen Gerüst-Formkörpers beim Aufbau dicht ausgeführt, wodurch für den Infiltrationsschritt keine weitere Form benötigt wird.

Mit Hilfe des Verfahrens können Formkörper hergestellt werden, die zumindest in einem Teilbereich einen Gradienten in der chemischen Zusammensetzung in einer, zwei oder drei Raumrichtungen aufweisen. Dabei ändert sich die Porosität bzw. die Porengröße der Gerüststruktur und somit der Volumenanteil der erstarrten infiltrierten Schmelze in im Wesentlichen kontinuierlicher oder bedingt durch die schichtweise Verarbeitung in stufenförmiger Weise in einer oder mehreren Raumrichtungen und nimmt über einen gewissen Bereich graduell ab bzw. zu. Beispielsweise können Formkörper mit einem radialen Gradienten gefertigt werden, bei dem sich die Werkstoffeigenschaften in radialer Richtung ändern.

Der Volumenanteil der beiden Komponenten des Verbundwerkstoffs ist in weiten Bereichen variierbar. Das erfindungsgemäße Verfahren ist besonders geeignet, um Formkörper aus einem Verbundwerkstoff herzustellen, bei dem im Formkörper sowohl Bereiche mit einem sehr hohen Anteil, beispielsweise über 90% Volumenanteil einer ersten Komponente, mit Bereichen mit einem sehr niedrigen Volumenanteil der erste Komponente, beispielsweise zwischen 10% und 20% Volumenanteil, vorliegen können. Diese Bereiche mit unterschiedlicher Zusammensetzung können zudem in räumlicher Nähe angeordnet sein. Dazu ist bei einer erfindungsgemäßen Ausführungsvariante vorgesehen, dass bei der Bildung des Gerüst-Formkörpers mindestens eine Aussparung mit geometrisch vorbestimmter Form gebildet wird, indem Pulverpartikel in dem entsprechenden Bereich nicht aufgeschmolzen werden und die losen Pulverpartikel nach dem Herstellen der Gerüststruktur und vor dem Infiltrieren mit der Schmelze entfernt werden. Um die losen Pulverpartikel entfernen zu können, müssen die Aussparungen von außenhalb zugänglich sein, d.h. sich die Aussparungen bis zur Oberfläche der Gerüststruktur erstrecken, und eine Mindestgröße aufweisen; in einer bevorzugten Ausführungsform beträgt die geringste Ausdehnung einer Aussparung der Gerüststruktur in einer Richtung mindestens 50 µm, insbesondere mindestens 100µm, besonders bevorzugt mindestens 1mm.
Gemäß einem Ausführungsbeispiel werden die Aussparungen der Gerüststruktur beim anschließenden Infiltrierungsschritt vollständig mit dem Infiltranten gefüllt.
Alternativ können die Aussparungen im Formkörper mit Hilfe von Formen oder Werkzeugen ungefüllt bzw. teilweise ungefüllt bleiben, d.h. in diesem Fall weist der infiltrierte Formkörper selbst offene Aussparungen auf. Beispielsweise können bei thermisch stark belasteten Formkörpern nicht infiltrierte Aussparungen in Form von Bohrungen der Aufnahme eines Kühlmittels dienen.

Eine Stärke des erfindungsgemäßen Verfahrens ist, dass auf einfache Art und Weise Formkörper hergestellt werden können, bei denen diese beiden Modifikationen der Gerüststruktur, nämlich Bildung von Aussparungen mit einer geometrisch vorbestimmten Form und Variation der Porosität in mindestens einer Raumrichtung, kombiniert werden.

Indem in einem Raumbereich in der Gerüststruktur des Formkörpers eine Mehrzahl von Aussparungen vorgesehen sind, die einen großen Volumenanteil einnehmen und mit erstarrter Schmelze gefüllt sind, kann in diesem Raumbereich ein höherer effektiver Volumenanteil der infiltrierten Materialkomponente erzielt werden als es bisher mit den aus dem Stand der Technik bekannten Verfahren möglich war. Bei dem bisher bekannten Verfahren ist der Volumenanteil der infiltrierten Komponente mit etwa 50% nach oben limitiert. Erfindungsgemäß kann in einem Raumbereich in der Gerüststruktur des Formkörpers beispielsweise eine Mehrzahl von länglichen, insbesondere zylinderförmigen Poren, die in einem Raster angeordnet sind, vorgesehen sein. Es kann eine Mehrzahl von länglichen, quaderförmigen, stapelweise angeordneten Aussparungen vorgesehen sein, um bereichsweise laminatartige Strukturen in der Gerüststruktur des Formkörpers zu bilden. Die Aussparungen können mit konischer Form ausgebildet sein und sich in einer Richtung verjüngen, um einen stetigeren Übergang zwischen den beiden Materialkomponenten zu ermöglichen.
Der Volumenanteil der infiltrierten Materialkomponente kann, wie voranstehend beschrieben, zusätzlich dadurch erhöht werden, indem für den Aufbau des Gerüst-Formkörpers auch das Material des Infiltranten verwendet wird.

Die Erfindung betrifft ferner einen Formkörper aus einem Durchdringungsverbundwerkstoff, der durch voranstehende Verfahrensschritte bzw. einer geeigneten Kombination voranstehender Verfahrensschritte hergestellt wird.
Dieser Formkörper unterscheidet sich von den aus dem Stand der Technik bekannten Formkörpern unter anderem dadurch, dass sich zumindest in einem Teilbereich die Porosität der Gerüststruktur in mindestens zwei Raumrichtungen lokal ändert. Die Gerüststruktur bildet dabei ein zusammenhängendes räumliches Netzwerk.

Im Folgenden werden drei konkrete Ausführungsbeispiele für Formkörper anhand der Zeichnungen Abb. 1 bis Abb. 5 (Ausführungsbeispiel 1: Abb. 1 bis Abb. 3, Ausführungsbeispiel 2: Abb. 4 und Ausführungsbeispiel 3: Abb. 5) näher erläutert.

Bei allen drei Ausführungsbeispielen hat der Formkörper (10,20 bzw. 30) eine annähernd quaderförmig äußere Form, wobei in Draufsicht im Innenbereich eine kleine Vertiefung vorgenommen wurde. Der Formkörper besteht aus einem Durchdringungsverbundwerkstoff aus zwei Komponenten, bei dem der Volumenanteil der ersten Komponente, die eine zusammenhängende Gerüststruktur ausbildet, von einem zentralen Bereich in radialer Richtung nach außen in diskreten Abstufungen zunimmt, während der Volumenanteil der zweiten Komponente entsprechend abnimmt. Es bilden sich daher einzelne zwiebelschalenartig angeordnete Teilbereiche (1, 2, 3 und 4) mit annähernd gleicher chemischer Zusammensetzung, wobei sich von innen nach außen der Volumenanteil der Komponenten ändert. Zur Vereinfachung der Darstellung ist in den gezeigten Ausführungsbeispielen eine sehr grobe Abstufung in vier Teilbereiche 1, 2,3 und 4 vorgenommen worden, bei entsprechender Führung des Laser bzw. Elektronenstrahls lassen sich feinere Übergänge bis hin zu einer echten Gradierung realisieren.

### Ausführungsbeispiel 1:

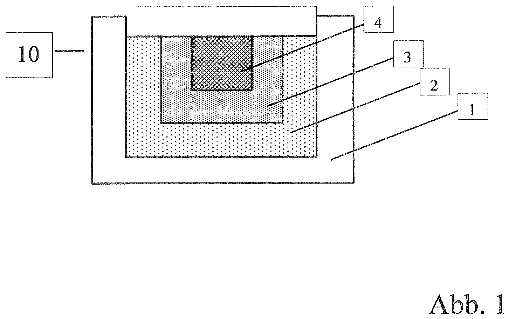

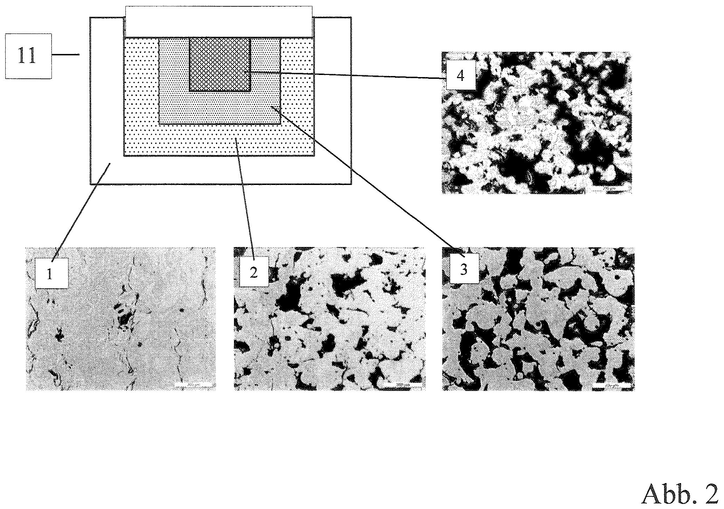

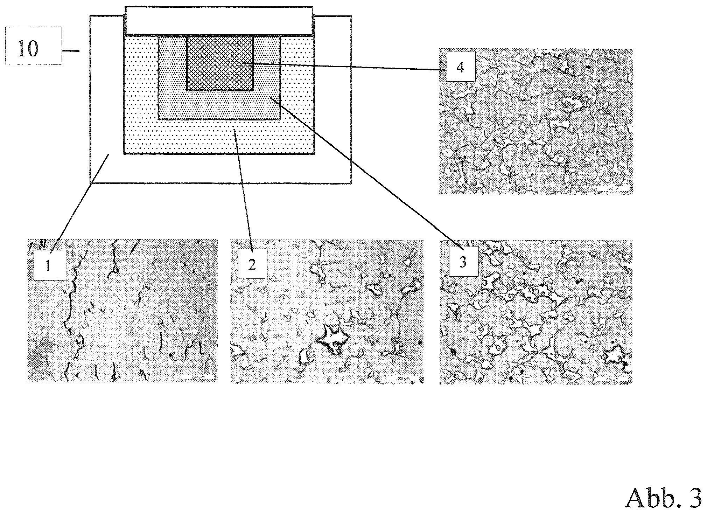

Abb. 1 zeigt eine schematische und geschnittene Seitenansicht des Formkörpers von Ausführungsbeispiel 1, dessen experimentelle Realisierung in Abb. 2 und Abb. 3 dargestellt ist. In Abb. 2 und Abb. 3 sind jeweils Lichtmikroskop Aufnahmen von Querschliffen in den einzelnen Teilbereichen 1 bis 4 abgebildet, wobei in Abb. 2 ein Querschliff durch den Gerüst-Formkörper (11) aus Wolfram vor der Infiltration mit Kupfer und in Abb. 3 ein Querschliff des fertigen Formkörpers (10) nach Infiltration mit Kupfer dargestellt ist.
Die Herstellung der Gerüststruktur aus Wolfram erfolgte unter einer Argon Schutzgasatmosphäre in einer Anlage zum selektiven Laserschmelzen, bei der ein im kontinuierlichen Modus betriebener Faserlaser mit Wellenlänge A=1070nm zum Einsatz kam. Es wurde Wolfram Pulver mit einer mittleren Pulvergröße von 20 - 50 µm und kugeliger Form verwendet. Der Aufbau der Wolfram Gerüststruktur (11) erfolgte schichtweise auf einer absenkbaren Bauplatte: Zur Bildung einer Schicht wurde mit einem Rakel eine gleichmäßige Pulverschicht aufgetragen und diese mit dem Laserstrahl selektiv in den einzelnen Teilbereichen 1 bis 4 unter unterschiedlichen Prozessparametern aufgeschmolzen. Während der Laserstrahl (Fokuswert von etwa 50-200µm) mit annähernd konstanter Scangeschwindigkeit von etwa 400mm/s in horizontaler Richtung mit einem Hatch-Abstand (Abstand zwischen Belichtungslinien) von etwa 130µm über die Probe geführt wurde (unabhängig von den einzelnen Teilbereichen), wurde in den einzelnen Teilbereichen die Laserleistung variiert: Für den äußeren Teilbereich 1 mit dem höchsten Volumenanteil von Wolfram wurde als Laserleistung 400Watt gewählt, für Teilbereich 2 200W, für Teilbereich 3 150 W und für Teilbereich 4 wurde die Laserleistung auf 100 W reduziert. Nach Fertigstellung einer Schicht wurde die Bauplatte um 30µm abgesenkt und dieser Prozessschritt iterativ bis zum vollständigen Aufbau des Formkörpers wiederholt. Anschließend wurde der Wolfram Gerüst-Formkörper mittels Drahterodieren von der Bauplatte getrennt. Abb. 2 zeigt Lichtmikroskop Aufnahmen der Teilbereiche 1 bis 4 eines Querschliffs durch diesen noch nicht infiltrierten Gerüst-Formkörper (Wolfram ist gräulich dargestellt, die Poren sind dunkel).
Zur Infiltration mit einer Kupferschmelze wurde der Wolfram Gerüst-Formkörper in einen Graphittiegel gestellt und in einen Vakuum-Druck-Sinterofen eingebracht, in dem der Gerüst-Formkörper unter Argon-Partialdruck (10mbar) mit einem aufgelegten OFHC (Oxygen-free high thermal conductivity) Kupferblock auf über 1150°C erwärmt wurde. Nach einer kurzen Haltezeit wurde der Gerüst-Formkörper unter Argon-Hochdruck von 50bar infiltriert. In Abb. 3 sind Lichtmikroskop Aufnahmen der Teilbereiche 1 bis 4 eines Querschliffs durch den infiltrierten WCu Formkörper (10) dargestellt (Wolfram ist gräulich dargestellt, mit Kupfer infiltrierte Poren sind hell, geschlossene, ungefüllte Poren dunkel). Während der äußere Teilbereich aus reinem Wolfram mit einem Volumenanteil von etwa 95 vol% aufgebaut ist (aufgrund der nicht offenen Porenstruktur dringt kein Kupferinfiltrat ein, diese Zwischenporen sind dunkel), bestehen die Teilbereiche 2 bis 4 aus einem Wolfram-Kupfer-Verbundwerkstoff (in den Lichtmikroskopaufnahmen sind vereinzelt auch ungefüllte, geschlossene Poren vorhanden). Der Volumenanteil von Wolfram beträgt im Teilbereich 2 etwa 87 vol%, im Teilbereich 3 etwa 79 vol.% und im Teilbereich 4 etwa 72 vol%.

### Ausführungsbeispiel 2:

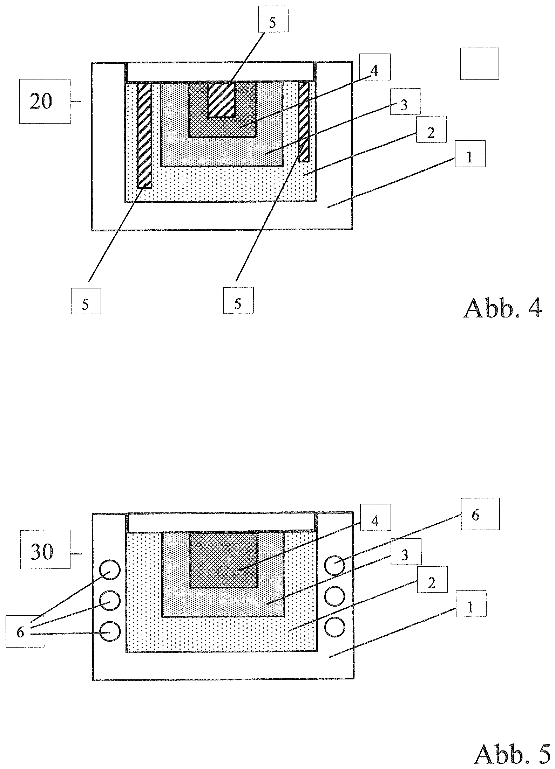

Im Ausführungsbeispiel 2 (Abb. 4) weist der Formkörper (20) zusätzlich auch mit Kupfer infiltrierte Aussparungen auf (es ist eine schematische und geschnittene Seitenansicht des Formkörpers abgebildet). Dazu werden in der Gerüststruktur aus Wolfram zusätzlich Aussparungen 5 mit einem Durchmesser deutlich größer als die durchschnittliche Pulvergröße des Wolfram Pulvers eingebracht, in dem das Pulver in diesen Bereichen nicht aufgeschmolzen wird und vor der Gasdruckinfiltration das nicht aufgeschmolzene Wolfram Pulver aus den Aussparungen der Gerüststruktur mittels Druckluft entfernt wird. Der Formkörper wird in einem Ultraschallbad gereinigt, in einem Trockenschrank getrocknet und anschließend infiltriert. Die Aussparungen sind mit Kupfer gefüllt.

### Ausführungsbeispiel 3:

Ausführungsbeispiel 3 (Abb. 5) unterscheidet sich vom Ausführungsbeispiel 2 dadurch, dass die Aussparungen nach der Infiltration ungefüllt bleiben. Dazu sind mittels Laserschmelzen die Aussparungen (Kühlkanäle) im dichten Teilbereich 1 vorgesehen, in dem keine offene Porosität vorliegt und das Infiltrat nicht eindringen kann.

## Patentansprüche

1. Verfahren zur Herstellung eines Formkörpers (10, 20, 30) aus einem metallischen Durchdringungsverbundwerkstoff auf Basis von Wolfram-Kupfer oder auf Basis von Molybdän-Kupfer mit den folgenden Schritten:
• Herstellen eines Gerüst-Formkörpers (11), der zumindest bereichsweise eine überwiegend offenporige Gerüststruktur aufweist, aus einem Pulver oder aus einer Pulvermischung mit Primärkomponente aus Molybdän oder aus Wolfram, wobei der Gerüst-Formkörper (11) lagenweise durch übereinanderliegende Schichten aufgebaut wird und zur Bildung einer Schicht jeweils das Pulver bzw. die Pulvermischung ohne Zusatz von organischen Binde- oder organischen Flussmitteln in einer Schicht aufgebracht wird, das Pulver bzw. die Pulvermischung mittels eines selektiven Strahlschmelzverfahrens an vorbestimmten Stellen zumindest teilweise lokal aufgeschmolzen wird und sich bei Erstarrung verfestigt
• Infiltrieren des Gerüst-Formkörpers (11) mit einer Schmelze aus Kupfer oder einer Kupferlegierung.

2. Verfahren nach Anspruch 1, **dadurch gekennzeichnet, dass** die Porosität oder die Porengröße der Gerüststruktur mittels des selektiven Strahlschmelzverfahrens räumlich unterschiedlich eingestellt wird.

3. Verfahren nach Anspruch 1 oder 2, **dadurch gekennzeichnet, dass** der Formkörper (10,20,30) einen Gradienten in der chemischen Zusammensetzung in einer oder mehr als einer Raumrichtung aufweist.

4. Verfahren nach Anspruch 1 bis 3, **dadurch gekennzeichnet, dass** in der Gerüststruktur mindestens eine Aussparung (5, 6) mit geometrisch vorbestimmter Form gebildet wird, indem Pulverpartikel in dem entsprechenden Bereich nicht aufgeschmolzen werden und die losen Pulverpartikel nach dem Herstellen der Gerüststruktur und vor dem Infiltrieren mit der Schmelze aus der Gerüststruktur entfernt werden.

5. Verfahren nach Anspruch 1 bis 4, **dadurch gekennzeichnet, dass** im Formkörper (10,20,30) mindestens eine Aussparung (6) mit geometrisch vorbestimmter Form gebildet wird.

6. Verfahren nach Anspruch 1 bis 5, **dadurch gekennzeichnet, dass** es sich beim selektiven Strahlschmelzverfahren um selektives Laserschmelzen (SLM) oder selektives Elektronenstrahlschmelzen (EBM) handelt.

7. Formkörper (10,20,30) aus einem Durchdringungsverbundwerkstoff auf Basis von Wolfram-Kupfer oder auf Basis von Molybdän-Kupfer, hergestellt durch ein Verfahren gemäß einem der Ansprüche 1 bis 6, **dadurch gekennzeichnet, dass** sich die Porosität der Gerüststruktur in mindestens zwei Raumrichtungen lokal ändert.

8. Formkörper nach Anspruch 7, **dadurch gekennzeichnet, dass** die Gerüststruktur Aussparungen (5, 6) mit einem Volumen, dessen geringste Ausdehnung in einer Richtung mindestens 100 µm beträgt, aufweist.

9. Formkörper nach Anspruch 8, **dadurch gekennzeichnet, dass** der Formkörper Aussparungen (6) mit einem Volumen, dessen geringste Ausdehnung in einer Richtung mindestens 100 µm beträgt, aufweist.

10. Formkörper nach Anspruch 7 bis 9, wobei zumindest ein Teil des Formkörpers einen zwei dimensionalen Gradienten in der chemischen Zusammensetzung aufweist

## Claims

1. A process for producing a shaped body (10, 20, 30) from a metallic infiltrated composite, based on tungsten copper or based on molybdenum copper, having the following steps:
• producing a shaped body framework (11) having a predominantly open-pore framework structure at least in some regions from a powder or a powder mixture having a primary component composed of molybdenum or tungsten, by construction of the shaped body framework (11) layer by layer via superposed layers and formation of each layer by application of the powder or powder mixture without addition of organic binders or organic fluxes in a layer, at least partial local melting of the powder or powder mixture at predetermined sites by means of a selective beam melting method and solidification thereof,
• infiltrating the shaped body framework (11) with a melt of copper or a copper alloy.

2. The process as claimed in claim 1, **characterized in that** the porosity or pore size of the framework structure is adjusted so as to be spatially different by means of the selective beam melting method.

3. The process as claimed in claim 1 or 2, **characterized in that** the shaped body (10, 20, 30) has a gradient in the chemical composition in one or more than one spatial direction.

4. The process as claimed in any of claims 1 to 3, **characterized in that** at least one recess (5, 6) having a geometrically predetermined form is formed in the framework structure by not melting powder particles in the corresponding region and removing the loose powder particles from the framework structure after the production of the framework structure and prior to infiltration with the melt.

5. The process as claimed in any of claims 1 to 4, **characterized in that** at least one recess (6) having a geometrically predetermined form is formed in the shaped body (10, 20, 30).

6. The process as claimed in any of claims 1 to 5, **characterized in that** the selective beam melting method is selective laser melting (SLM) or selective electron beam melting (EBM).

7. A shaped body (10, 20, 30) formed from an infiltrated composite based on tungsten copper or based on molybdenum copper, produced by a method according to one of claims 1 to 6, **characterized in that** the porosity of the framework structure changes locally in at least two spatial directions.

8. The shaped body as claimed in claim 7, **characterized in that** the framework structure has recesses (5, 6) having a volume having a lowest extent in any direction of at least 100 µm.

9. The shaped body as claimed in claim 8, **characterized in that** the shaped body has recesses (6) having a volume having a lowest extent in any direction of at least 100 µm.

10. The shaped body as claimed in any of claims 7 to 9, wherein at least part of the shaped body has a two-dimensional gradient in the chemical composition.

## Revendications

1. Procédé de fabrication d'un corps moulé (10, 20, 30) en un matériau composite métallique pénétré à base de tungstène-cuivre ou à base de molybdène-cuivre comprenant les étapes suivantes :
- la fabrication d'un corps moulé de squelette (11), qui présente au moins en zones une structure de squelette majoritairement à pores ouverts, à partir d'une poudre ou à partir d'un mélange de poudres contenant un composant primaire en molybdène ou en tungstène, le corps moulé de squelette (11) étant formé en couches par des couches superposées et, pour la formation d'une couche, la poudre ou le mélange de poudres étant à chaque fois appliqué en une couche sans ajout de liants organiques ou de fondants organiques, la poudre ou le mélange de poudres étant au moins partiellement fondu localement à des emplacements prédéterminés au moyen d'un procédé de fusion par faisceau sélectif, et se consolidant lors de la solidification,
- l'infiltration du corps moulé de squelette (11) avec une masse fondue de cuivre ou d'un alliage de cuivre.

2. Procédé selon la revendication 1, **caractérisé en ce que** la porosité ou la taille de pore de la structure de squelette est ajustée différemment dans l'espace au moyen du procédé de fusion par faisceau sélectif.

3. Procédé selon la revendication 1 ou 2, **caractérisé en ce que** le corps moulé (10, 20, 30) présente un gradient dans la composition chimique dans une ou plus d'une direction de l'espace.

4. Procédé selon les revendications 1 à 3, **caractérisé en ce qu'**au moins un évidement (5, 6) ayant une forme géométriquement prédéterminée est formé dans la structure de squelette, **en ce que** des particules de poudre dans la zone correspondante ne sont pas fondues et les particules de poudre lâches sont éliminées de la structure de squelette après la fabrication de la structure de squelette et avant l'infiltration avec la masse fondue.

5. Procédé selon les revendications 1 à 4, **caractérisé en ce qu'**au moins un évidement (6) ayant une forme géométriquement prédéterminée est formé dans le corps moulé (10, 20, 30).

6. Procédé selon les revendications 1 à 5, **caractérisé en ce que** le procédé de fusion par faisceau sélectif consiste en une fusion laser sélective (SLM) ou une fusion par faisceau d'électrons sélective (EBM).

7. Corps moulé (10, 20, 30) en un matériau composite pénétré à base de tungstène-cuivre ou à base de molybdène-cuivre, fabriqué par un procédé selon l'une quelconque des revendications 1 à 6, **caractérisé en ce que** la porosité de la structure de squelette se modifie localement dans au moins deux directions de l'espace.

8. Corps moulé selon la revendication 7, **caractérisé en ce que** la structure de squelette comprend des évidements (5, 6) ayant un volume dont la dimension la plus petite dans une direction est d'au moins 100 µm.

9. Corps moulé selon la revendication 8, **caractérisé en ce que** le corps moulé comprend des évidements (6) ayant un volume dont la dimension la plus petite dans une direction est d'au moins 100 µm.

10. Corps moulé selon les revendications 7 à 9, dans lequel au moins une partie du corps moulé présente un gradient bidimensionnel dans la composition chimique.
